# EUROPEAN PATENT APPLICATION

(11) **EP 4 174 308 A1**
(43) Date of publication of application: **03.05.2023**
(21) Application number: 22189797.8
(22) Date of filing: 10.08.2022
(51) Int. Cl.: F03B 13/18, H02K 7/18

(54) **A NOVEL EFFICIENT POWER GENERATION DEVICE OF TIDE-WAVE ENERGY**

(30) Priority: 27.10.2021 CN 202111253918
(71) Applicant: Yang, Xuefeng, Zhangzhou, Fujian (CN)
(72) Inventor: Yang, Xuefeng, Zhangzhou, Fujian (CN)
(74) Representative: Cabinet Chaillot

(57) **Abstract**

The invention discloses a novel efficient power generation device of tide-wave energy, comprising a floating body provided on the sea surface, a support device provided on the coast, and a lever device connecting the floating body with the support device; the lever device comprises a force transmission rod and a main lever provided with a connecting device; the power generation device comprises a driving device, one end of which is connected with the connecting device to rotate the driving device and the other end is connected with the external electric motor device. The solution presented by the invention enables the up-and-down motions of the floating body through the acting force of the tide, to drive the up-and-down motion of the force transmission rod. The lever device connected with the support device by hinge, rotates the driving device through the connecting device, to rotate the external electric motor device to provide electric power, realizing the low investments, low cost and the high utilization rate of tide-wave with the simple requirements.

## Description

### Technical Field

The invention relates to the field of power generation devices, in particular to a novel efficient power generation device of tide-wave energy.

### Background

Energy shortage and environmental pollution are two complex problems in front of people worldwide. China is experiencing a relatively tight period of power supply, seriously affecting industrial and agricultural production and people's daily lives; thereby it is an extensively urgent task for the benefit of future generations to search for a kind of environmentally friendly and plentiful new energy. The development and utilization of tide power generation can be regarded as a perfect solution. The few existing tide power stations regardless of internationally and domestically, tend to utilize the unique geographical environment of the seashore and to generate electricity by rotating the water turbines through the fluidity of the rising and falling tides, which is restricted by the environment, the limited water flow, and the sea area channels, resulting in the small scale and stalled development.

### Summary of the Invention

To solve the above technical problems, the invention provides a technical solution:
A novel efficient power generation device of tide-wave energy, wherein comprises the floating body provided on the sea surface, the support device provided on the coast, and the lever device connecting the floating body with the support device; the lever device comprises the force transmission rod and the main lever on which provided the connecting device; one end of the main lever is connected with the support device, and the other end of the main lever is connected with the force transmission rod, and the other end of the force transmission rod is connected with the floating body; the power generation device comprises the driving device, one end of which is connected with the connecting device to rotate the driving device and the other end is connected with the external electric motor device.

Further, the floating body is a box body, vertically provided with the force transmission rod.

Further, the main lever is connected with the support device by hinge.

Further, the support device and the driving device are provided on the same plane.

Further, the connecting device is a connecting rod, provided at the middle-end of the main lever.

After adopting the above solutions, the invention has the following advantages: the solution present by the invention enables the up-and-down motions of the floating body through the acting force of the tide, and the motion of the floating body drive the up-and-down motion of the force transmission rod. The lever device connected with the support device by hinge, rotates the driving device through the connecting device, and the rotating driving device drives the external motor device to rotate to provide electric power, with the simple requirements of having tide waves on the sea surface, realizing the low investments, low cost and the high utilization rate of tide-wave.

### Brief Description of the Drawings

To illustrate the technical solutions of the embodiments of the invention, the drawings attached to the embodiments will be briefly described as follows, and it should be understood that the following embodiments with attached drawings are exemplary and not the limitations, and other related drawings can be made by those of ordinary technicians in the art according to these drawings without creative efforts.
FIG. 1 is a structural schematic view of a novel efficient power generation device of tide-wave energy.
FIG. 2 is a partial structural schematic view of a novel efficient power generation device of tide-wave energy.

### Description of Embodiments

To enable the objectives, technical solutions and advantages of the embodiments of the invention to be presented more clearly, a clear and specific description of the novel efficient power generation device of tide-wave energy is given below in combination with the attached drawings. The described embodiments are a part of the inventions instead of covering all embodiments. The components of the embodiments of the invention described and illustrated with the attached drawings hereinafter, can be provided with different configurations and designs.

Therefore, the specific description of the embodiments of the invention provided with the attached drawing hereinafter is not intended to restrict the scope of the invention, and what is shown in the drawings is only one selected embodiment of the invention. All other embodiments obtained by ordinary technicians in the art based on the embodiments of the invention and without creative efforts shall fall within the protection scope of the present disclosure.

It should be noted that similar reference numbers and letters indicate identical items in the following drawings. Therefore, if a specific item is defined in one figure, it is not necessary to make further definitions and explanations in the subsequent figures.

In the description of the embodiments of the invention, it should be noted that the orientation or positional relationship indicated by the terms 'center', 'up', 'down', 'left', 'right', 'vertical', 'horizontal', 'internal', 'external', etc., are based on the orientation or positional relationship shown in the drawings or the general orientation or positional relationship of the invention in use. It is merely for simplifying the description of the invention, not indicating or implying that the device or component referred in the embodiments must be provided, constructed or operated in a particular orientation, and shall not be regarded as the limitation of the invention. In addition, the terms such as 'first', 'second', 'third' are merely intended to distinguish the description and not to be regarded as indicating or implying the relative importance.

In addition, terms such as 'horizontal', 'vertical', 'overhang' do not tend to indicate that the component is absolutely horizontal or vertical, with the tolerance of a slight inclination. The term 'horizontal' herein merely refers to the direction is relatively 'horizontal' compared to 'vertical', not indicating that the structure is absolutely horizontal or vertical, with the tolerance of a slight inclination.

In the description of the embodiments of the invention, 'several' stands for at least two.

In the description of the embodiments of the disclosure, it should be noted that the term 'provided', 'connect' should be understood in broad sense unless having specific provisions and restrictions. For example, 'connect' can be regarded as a fixed connection, a detachable connection, or an integrated connection; be a mechanical connection or an electrical connection; be a direct connection, an indirect connection through an intermediate medium, or an internal connection within the two elements. The specific meanings of the above terms of the inventions can be understood differently under particular situations for ordinary technicians in the art.

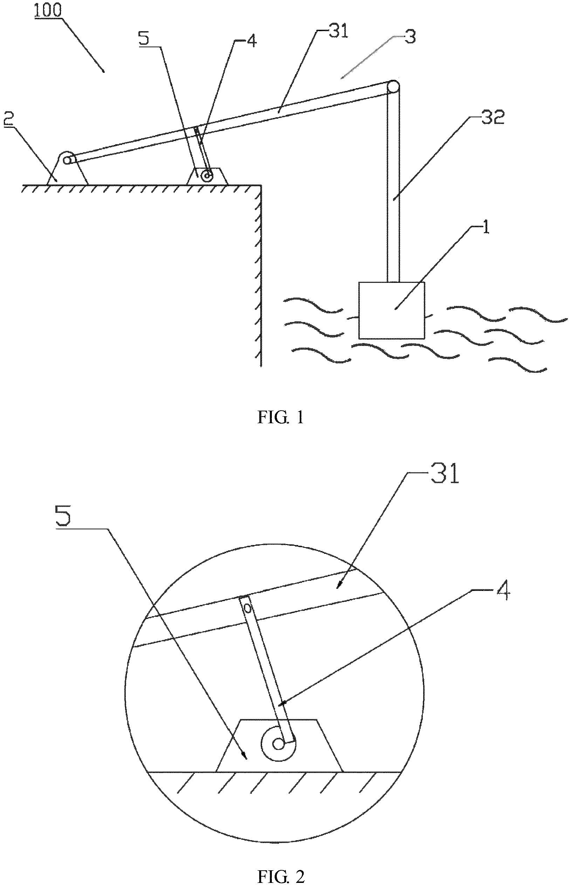

According to FIG. 1-2, the invention provides a novel efficient power generation device 100 of tide-wave energy, wherein the power generation device 100 comprises the floating body 1 provided on the sea surface, the support device 2 provided on the coast, and the lever device 3 connecting the floating body 1 with the support device 2; the lever device 3 comprises the force transmission rod 32 and the main lever 31 on which provided the connecting device 4; one end of the main lever 31 is connected with the support device 2, and the other end of the main lever 31 is connected with the force transmission rod 32, and the other end of the force transmission rod 32 is connected with the floating body 1; the power generation device 100 comprises the driving device 5, one end of which 5 is connected with the connecting device 4 to rotate the driving device 5 and the other end is connected with the external electric motor device (not shown).

Further, the floating body 1 is a box body, vertically provided with the force transmission rod 32.

Further, the main lever 31 is connected with the support device 2 by hinge.

Further, the support device 2 and the driving device 5 are provided on the same plane.

Further, the connecting device 4 is a connecting rod, provided at the middle-end of the main lever 31.

When the invention is in use, the acting force of the tide enables the up-and-down motions of the floating body 1 on the sea surface, and the motion of the floating body 1 drives the vertical up-and-down motion of force transmission rod 32; the transmission device 32 enables the motions of the connecting device 4, to rotate the driving device 5 and the driving device 5 is connected with the electric motor device to realize power generation.

After adopting the above solutions, the invention has the following advantages: the solution present by the invention enables the up-and-down motions of the floating body through the acting force of the tide, and the motion of the floating body drive the up-and-down motion of the force transmission rod. The lever device connected with the support device by hinge, rotates the driving device through the connecting device, and the rotating driving device drives the external electric motor device to rotate to provide electric power, with the simple requirements of having the tide waves on the sea surface, realizing the low investments, low cost and the high utilization rate of tide-wave.

The invention and the embodiments thereof are described hereinabove, and this description is not restrictive. What is shown in the drawings is only one of the embodiments of the invention, and the actual structure is not limited thereto. In summary, structural methods and embodiments similar to the technical solution without departing from the inventive purpose of the invention made by inspired ordinary technicians in the art without creative efforts shall all fall within the protection scope of the invention.

## Claims

1. A novel efficient power generation device (100) of tide-wave energy,
wherein the power generation device (100) comprises the floating body (1) provided on the sea surface, a support device (2) provided on the coast, and a lever device (3) connecting the floating body (1) with the support device (2); the lever device (3) comprises a force transmission rod (32) and a main lever (31) on which provided a connecting device (4); one end of the main lever (31) is connected with the support device (2), and the other end of the main lever (31) is connected with the force transmission rod (32), and the other end of the force transmission rod (32) is connected with the floating body (1); the power generation device (100) comprises a driving device (5), one end of which is connected with the connecting device (4) to rotate the driving device (5) and the other end is connected with an external electric motor device.

2. The power generation device (100) according to claim 1, wherein the floating body (1) is a box body, vertically provided with the force transmission rod (32).

3. The power generation device (100) according to claim 2, wherein the main lever (31) is connected with the support device (2) by hinge.

4. The power generation device (100) according to claim 2, wherein the support device (2) and the driving device (5) are provided on a same plane.

5. The power generation device (100) according to claim 1, wherein the connecting device (4) is a connecting rod, provided at the middle-end of the main lever (31).
